(19) **Europäisches Patentamt / European Patent Office / Office européen des brevets**

(11) **EP 4 293 572 A1**

(12) # EUROPEAN PATENT APPLICATION

(43) Date of publication:
**20.12.2023 Bulletin 2023/51**

(21) Application number: **23173893.1**

(22) Date of filing: **17.05.2023**

(51) International Patent Classification (IPC):
**G06N 3/0442** (2023.01)  **G06N 3/045** (2023.01)
**G06N 3/0464** (2023.01)  **G06N 3/0499** (2023.01)
**G06N 3/082** (2023.01)  **G06N 3/084** (2023.01)
**G06N 3/09** (2023.01)  **G06N 3/0985** (2023.01)
**G06Q 10/04** (2023.01)  **G06Q 10/063** (2023.01)
**G06Q 50/30** (2012.01)  **G06N 3/094** (2023.01)

(52) Cooperative Patent Classification (CPC):
**G06N 3/045; G06N 3/0442; G06N 3/0464;
G06N 3/0499; G06N 3/082; G06N 3/084;
G06N 3/09; G06N 3/094; G06N 3/0985;
G06Q 10/04; G06Q 10/063; G06Q 50/30**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.06.2022 IN 202221033795**

(71) Applicant: **Tata Consultancy Services Limited
Maharashtra (IN)**

(72) Inventors:
- **SATHEESH, Krishnan**
  **600113 Chennai, Tamil Nadu (IN)**
- **REGIKUMAR, Rohith**
  **600113 Chennai, Tamil Nadu (IN)**
- **RAMANUJAM, Arvind**
  **600113 Chennai, Tamil Nadu (IN)**
- **JAYAPRAKASH, Rajesh**
  **600113 Chennai, Tamil Nadu (IN)**

(74) Representative: **Goddar, Heinz J. et al
Boehmert & Boehmert
Anwaltspartnerschaft mbB
Pettenkoferstrasse 22
80336 München (DE)**

(54) **METHOD AND SYSTEM FOR ADVERSARIAL MULTI-ARCHITECTURE BASED DELAY PREDICTION IN SCHEDULED TRANSPORTATION NETWORKS**

(57) The present disclosure predicts a delay associated with a vehicle. Conventional methods are mainly mathematical based and machine learning based networks are not predicting delay accurately. Initially, the present disclosure Initially, the system receives a user query comprising an expected delay of a target vehicle in at least one target station. Further, a real time data associated with the user query in a predefined horizon is obtained. Further, a spatial feature vector, a temporal feature vector and spatiotemporal features are extracted based on the real time data using a feature extraction technique. Finally, the expected is predicted based on the plurality of features using a trained adversarial regression model, wherein the trained adversarial regression model comprises a critic network and a regressor network. The regressor network is trained with a plurality of architectures and a best architecture with minimum Mean Absolute Error (MAE) is selected for delay prediction.

FIG. 6

**Description**

CROSS-REFERENCE TO RELATED APPLICATIONS AND PRIORITY

The present application claims priority to Indian application no. 202221033795, filed on June 13, 2022.

TECHNICAL FIELD

The disclosure herein generally relates to the field of machine learning and, more particularly, to a method and system for adversarial multi-architecture based delay prediction in scheduled transportation networks.

BACKGROUND

Transportation networks have become an essential part of life and delay in transport is an unavoidable thing. Handling delays is crucial to a well-oiled transport network. Delay prediction allows operators to perform necessary dispatches, as well as make modifications to future timetables to mitigate delay. Delay predictions need data including real time and historical data which is mainly provided by agencies working with the companies that run transportation networks. The data includes timetables and live boards, which tell us when a vehicle has arrived at and departed from a stop, along with delays experienced.

Conventional methods are mainly based on mathematical models built without machine learning capability and hence accuracy is less. Some other conventional methods which are Machine Learning (ML) based, follow similar trend of mathematical models and it has been identified from the analysis that the conventional methods are considering some common features like running times, distance between station, and fail to predict an accurate delay. Further, conventional methods are network specific and cannot be implemented for any dynamic network. Hence there is a challenge in using multimodal operational data to perform a holistic and accurate delay prediction.

SUMMARY

Embodiments of the present disclosure present technological improvements as solutions to one or more of the above-mentioned technical problems recognized by the inventors in conventional systems. For example, in one embodiment, a method for Adversarial multi-architecture based delay prediction in scheduled transportation networks is provided. The method includes receiving by one or more hardware processors, a user query with respect to an expected delay of a target vehicle pertaining to a scheduled transportation network, in at least one target station, wherein the scheduled transportation networks include a plurality of stations and a plurality of vehicles. Further, the method includes obtaining by the one or more hardware processors, a real time data associated with the user query in a predefined horizon using a real time data acquisition system. Furthermore, the method includes extracting by the one or more hardware processors, a plurality of spatial features based on the real time data, the plurality of stations in the scheduled transportation networks, the plurality of vehicles in the scheduled transportation networks, and the predefined horizon, using a feature extraction technique. Furthermore, the method includes extracting by the one or more hardware processors, a plurality of temporal features based on the real time data, the plurality of stations, and the predefined horizon, using the feature extraction technique, wherein the plurality of temporal features are segmented based on a plurality of vehicle categories, wherein the plurality of vehicle categories comprises a route based vehicle, a trip based vehicle, and a current vehicle. Furthermore, the method includes extracting by the one or more hardware processors, a plurality of spatiotemporal features based on the plurality of stations, the plurality of vehicles, and the real time data, using the feature extraction technique. Finally, the method includes predicting by the one or more hardware processors, the expected delay of the target vehicle in at least one target station based on the spatial features, the temporal features and the spatiotemporal features using a trained adversarial regression model, wherein the trained adversarial regression model comprises a critic network and a regressor network, wherein the regressor network is trained using a plurality of regression architectures, wherein the plurality of regression architectures are trained simultaneously and, wherein one architecture with a minimum Mean Absolute Error (MAE) is selected from among the plurality of regression architectures is selected for the expected delay prediction.

In another aspect, a system for Adversarial multi-architecture based delay prediction in scheduled transportation networks is provided. The system includes at least one memory storing programmed instructions, one or more Input /Output (I/O) interfaces, and one or more hardware processors operatively coupled to the at least one memory, wherein the one or more hardware processors are configured by the programmed instructions to receive a user query with respect to an expected delay of a target vehicle pertaining to a scheduled transportation network, in at least one target station, wherein the scheduled transportation networks include a plurality of stations and a plurality of vehicles. Further, the one or more hardware processors are configured by the programmed instructions to obtain a real time data associated with the user query in a predefined horizon using a real time data acquisition system. Furthermore, the one or more hardware processors are configured by the programmed instructions to extract, a plurality of spatial features based on the real time data, the plurality of stations in the scheduled transportation networks, the plurality of vehicles in the scheduled transportation networks, and the predefined horizon, using a feature extraction technique. Furthermore, the one or more hardware processors are configured by the programmed instructions to extract a plurality of temporal features based on the real time data, the plurality of stations, and the predefined horizon, using the feature extraction technique, wherein the plurality of temporal features are segmented based on a plurality of vehicle categories, wherein the plurality of vehicle categories comprises a route based vehicle, a trip based vehicle, and a current vehicle. Furthermore, the one or more hardware processors are configured by the programmed instructions to extract a plurality of spatiotemporal features based on the plurality of stations, the plurality of vehicles, and the real time data, using the feature extraction technique. Finally, the one or more hardware processors are configured by the programmed instructions to predict the expected delay of the target vehicle in at least one target station based on the spatial features, the temporal features and the spatiotemporal features using a trained adversarial regression model, wherein the trained adversarial regression model comprises a critic network and a regressor network, wherein the regressor network is trained using a plurality of regression architectures, wherein the plurality of regression architectures are trained simultaneously and, wherein one architecture with a minimum Mean Absolute Error (MAE) is selected from among the plurality of regression architectures is selected for the expected delay prediction.

In yet another aspect, a computer program product including a non-transitory computer-readable medium having embodied therein a computer program for Adversarial multi-architecture based delay prediction in scheduled transportation networks is provided. The computer readable program, when executed on a computing device, causes the computing device to receive a user query with respect to an expected delay of a target vehicle pertaining to a scheduled transportation network, in at least one target station, wherein the scheduled transportation networks include a plurality of stations and a plurality of vehicles. Further, the computer readable program, when executed on a computing device, causes the computing device to obtain a real time data associated with the user query in a predefined horizon using a real time data acquisition system. Furthermore, computer readable program, when executed on a computing device, causes the computing device to extract a plurality of spatial features based on the real time data, the plurality of stations in the scheduled transportation networks, the plurality of vehicles in the scheduled transportation networks, and the predefined horizon, using a feature extraction technique. Furthermore, the computer readable program, when executed on a computing device, causes the computing device to extract a plurality of temporal features based on the real time data, the plurality of stations, and the predefined horizon, using the feature extraction technique, wherein the plurality of temporal features are segmented based on a plurality of vehicle categories, wherein the plurality of vehicle categories comprises a route based vehicle, a trip based vehicle, and a current vehicle. Furthermore, the computer readable program, when executed on a computing device, causes the computing device to extract a plurality of spatiotemporal features based on the plurality of stations, the plurality of vehicles, and the real time data, using the feature extraction technique. Finally, the computer readable program, when executed on a computing device, causes the computing device to predict the expected delay of the target vehicle in at least one target station based on the spatial features, the temporal features and the spatiotemporal features using a trained adversarial regression model, wherein the trained adversarial regression model comprises a critic network and a regressor network, wherein the regressor network is trained using a plurality of regression architectures, wherein the plurality of regression architectures are trained simultaneously and, wherein one architecture with a minimum Mean Absolute Error (MAE) is selected from among the plurality of regression architectures is selected for the expected delay prediction.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 is a functional block diagram of a system for adversarial multi-architecture based delay prediction in scheduled transportation networks, in accordance with some embodiments of the present disclosure.
FIG. 2 is an exemplary flow diagram illustrating a processor implemented method for adversarial multi-architecture based delay prediction in scheduled transportation networks, implemented by the system of FIG. 1, in accordance with some embodiments of the present disclosure.
FIGS. 3A to 3G illustrate a plurality of regression architectures associated with a regressor network of the processor implemented method for adversarial multi-architecture based delay prediction in scheduled transportation networks, implemented by the system of FIG. 1, in accordance with some embodiments of the present disclosure.
FIGS. 4A to 4C illustrate corresponding internal architecture of spatial, temporal and spatiotemporal blocks of the processor implemented method for adversarial multi-architecture based delay prediction in scheduled transportation networks, implemented by the system of FIG. 1, in accordance with some embodiments of the present disclosure.

FIG. 5 illustrates a training method for the processor implemented method for adversarial multi-architecture based delay prediction in scheduled transportation networks, in accordance with some embodiments of the present disclosure.

FIG. 6 illustrates a functional architecture of the system of FIG. 1, for adversarial multi-architecture based delay prediction in scheduled transportation networks, in accordance with some embodiments of the present disclosure.

## DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Conventional mathematical models in the field of transportation management are less accurate. Some conventional methods incorporate station and vehicle identifiers into the feature vector which makes it network specific. Some other Machine Learning (ML) based methods are using some common features because of which the accuracy is less.

Embodiments herein provide a method and system for adversarial multi-architecture based delay prediction in scheduled transportation networks. The present disclosure provides an accurate delay prediction for scheduled transport vehicles considering multidimensional features. Initially, the system receives a user query comprising an expected delay of a target vehicle in at least one target station. Further, a real time data associated with the user query in a predefined horizon is obtained using a real time data acquisition system. Further, a plurality of spatial features are extracted based on the real time data, a plurality of stations and the predefined horizon using a feature extraction technique. Similarly, a plurality of temporal features are extracted based on the real time data. Further, a plurality of spatiotemporal features are extracted based on the plurality of stations, the plurality of vehicles and the real time data using the feature extraction technique. Finally, the expected delay of the target vehicle in at least one target station is predicted based on the plurality of spatial features, the plurality of temporal features and the plurality of spatiotemporal features using a trained adversarial regression model. The trained adversarial regression model comprises a critic network and a regressor network. The regressor network is trained with a plurality of regression architectures and a best architecture with minimum Mean Absolute Error (MAE) is selected for delay prediction.

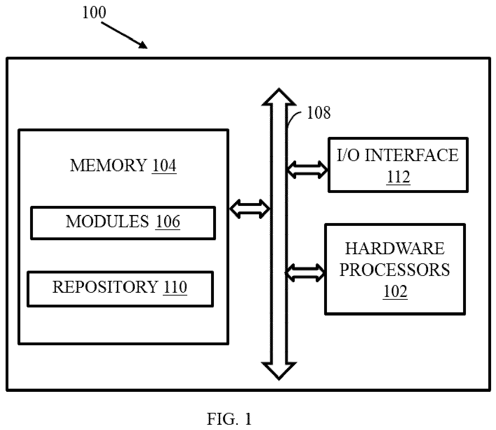

Referring now to the drawings, and more particularly to FIGS. 1 through 6, where similar reference characters denote corresponding features consistently throughout the figures, there are shown preferred embodiments and these embodiments are described in the context of the following exemplary system and/or method.

FIG. 1 is a functional block diagram of an adversarial multi-architecture based delay prediction in scheduled transportation networks, in accordance with some embodiments of the present disclosure. The system 100 includes or is otherwise in communication with hardware processors 102, at least one memory such as a memory 104, an I/O interface 112. The hardware processors 102, memory 104, and the Input /Output (I/O) interface 112 may be coupled by a system bus such as a system bus 108 or a similar mechanism. In an embodiment, the hardware processors 102 can be one or more hardware processors.

The I/O interface 112 may include a variety of software and hardware interfaces, for example, a web interface, a graphical user interface, and the like. The I/O interface 112 may include a variety of software and hardware interfaces, for example, interfaces for peripheral device(s), such as a keyboard, a mouse, an external memory, a printer and the like. Further, the I/O interface 112 may enable the system 100 to communicate with other devices, such as web servers, and external databases. For example, other devices comprises a plurality of sensors and a plurality of camera.

The I/O interface 112 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface 112 may include one or more ports for connecting several computing systems with one another or to another server computer. The I/O interface 112 may include one or more ports for connecting several devices to one another or to another server.

The one or more hardware processors 102 may be implemented as one or more microprocessors, microcomputers, microcontrollers, digital signal processors, central processing units, node machines, logic circuitries, and/or any devices that manipulate signals based on operational instructions. Among other capabilities, the one or more hardware processors 102 is configured to fetch and execute computer-readable instructions stored in the memory 104.

The memory 104 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, the memory 104 includes a plurality of modules 106. The memory 104 also includes a data repository (or repository) 110 for storing data processed, received, and generated by the plurality of modules 106.

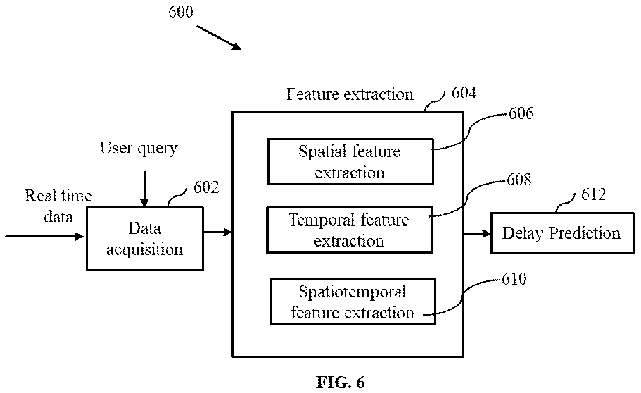

The plurality of modules 106 include programs or coded instructions that supplement applications or functions performed by the system 100 for adversarial multi-architecture based delay prediction in scheduled transportation networks. The plurality of modules 106, amongst other things, can include routines, programs, objects, components, and data structures, which performs particular tasks or implement particular abstract data types. The plurality of modules 106 may also be used as, signal processor(s), node machine(s), logic circuitries, and/or any other device or component that manipulates signals based on operational instructions. Further, the plurality of modules 106 can be used by hardware, by computer-readable instructions executed by the one or more hardware processors 102, or by a combination thereof. The plurality of modules 106 can include various sub-modules (not shown). The plurality of modules 106 may include computer-readable instructions that supplement applications or functions performed by the system 100 for the semantic navigation using spatial graph and trajectory history. In an embodiment, the modules 106 includes a data acquisition module (shown in FIG. 6), a feature extraction module (shown in FIG. 6) and a delay prediction module (shown in FIG. 6). Further, the Feature extraction module includes a spatial feature extraction module (shown in FIG. 6), a temporal feature extraction module (shown in FIG. 6) and a spatiotemporal feature extraction module (shown in FIG. 6). In an embodiment, FIG. 6 illustrates a functional architecture of the system of FIG. 1, for adversarial multi-architecture based delay prediction in scheduled transportation networks, in accordance with some embodiments of the present disclosure.

The data repository (or repository) 110 may include a plurality of abstracted piece of code for refinement and data that is processed, received, or generated as a result of the execution of the plurality of modules in the module(s) 106.

Although the data repository 110 is shown internal to the system 100, it will be noted that, in alternate embodiments, the data repository 110 can also be implemented external to the system 100, where the data repository 110 may be stored within a database (repository 110) communicatively coupled to the system 100. The data contained within such external database may be periodically updated. For example, new data may be added into the database (not shown in FIG. 1) and/or existing data may be modified and/or non-useful data may be deleted from the database. In one example, the data may be stored in an external system, such as a Lightweight Directory Access Protocol (LDAP) directory and a Relational Database Management System (RDBMS).

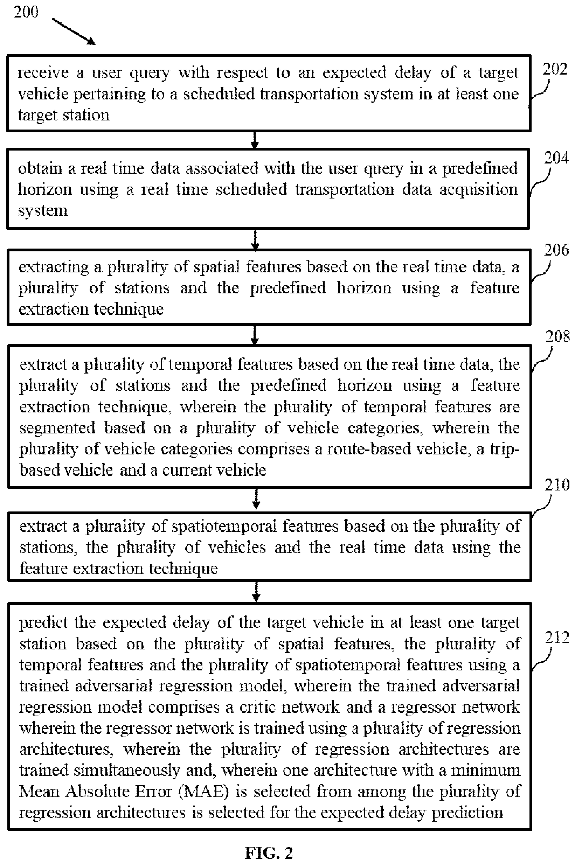

FIG. 2 is an exemplary flow diagram illustrating a method 200 for adversarial multi-architecture based delay prediction in scheduled transportation networks implemented by the system of FIG. 1 according to some embodiments of the present disclosure. In an embodiment, the system 100 includes one or more data storage devices or the memory 104 operatively coupled to the one or more hardware processor(s) 102 and is configured to store instructions for execution of steps of the method 200 by the one or more hardware processors 102. The steps of the method 200 of the present disclosure will now be explained with reference to the components or blocks of the system 100 as depicted in FIG. 1 and the steps of flow diagram as depicted in FIG. 2. The method 200 may be described in the general context of computer executable instructions. Generally, computer executable instructions can include routines, programs, objects, components, data structures, procedures, modules, functions, etc., that perform particular functions or implement particular abstract data types. The method 200 may also be practiced in a distributed computing environment where functions are performed by remote processing devices that are linked through a communication network. The order in which the method 200 is described is not intended to be construed as a limitation, and any number of the described method blocks can be combined in any order to implement the method 200, or an alternative method. Furthermore, the method 200 can be implemented in any suitable hardware, software, firmware, or combination thereof.

At step 202 of the method 200, the one or more hardware processors 102 are configured by the programmed instructions to receive a user query with respect to an expected delay of a target vehicle pertaining to a scheduled transportation network, in at least one target station. The scheduled transportation networks include a plurality of stations and a plurality of vehicles. For example, the scheduled transportation networks can be a railway transport service, an airway transport service, a waterway transport service, a roadway transport service, and the like.

At step 204 of the method 200, the data acquisition module 602 executed by the one or more hardware processors 102 is configured by the programmed instructions to obtain a real time data associated with the user query in a predefined horizon (a predefined window) using a real time data acquisition system. For example, real time data is obtained from Application Programming interfaces (APIs) provided by a transport operator independent of the system 100. An example real time data includes a trip date, a vehicle ID, a route ID, a station ID, an arrival time stamp (Arr_ts), a departure time stamp (Dep_ts), an actual arrival time stamp(Actual arr_ts), an actual departure time stamp (Actual dep_ts), an arrival delay (Arr delay), a departure delay (Dep_delay) as given in Table I.

Table I

| Trip date | Vehicle ID | Route ID | Trip ID | Station ID | Arr_ts | Dep_ts | Actual_arr_ts | Actual_dep_ts | Arr_delay | Dep_delay |
|---|---|---|---|---|---|---|---|---|---|---|
| 2015-03-02 | 8854 | 1 | 138241 3 | 4821 | 2015-03-02 13:34:56 | 2015-03-02 13:34:56 | 2015-03-02 13:37:12.498863 | 2015-03-02 13:37:14.9288179 | 136.49886298 1796 | 138.92 81790 2565 |
| 2015-03-02 | 8854 | 1 | 138241 3 | 4824 | 2015-03-02 13:37:46 | 2015-03-02 13:37:46 | 2015-03-02 13:38:34.879879 | 2015-03-02 13:38:37.04 7744 | 48.8 7987 8997 8027 | 51.047 74403 57208 |
| 2015-03-02 | 8854 | 1 | 138241 3 | 5442 | 2015-03-02 13:39:00 | 2015-03-02 13:39:00 | 2015-03-02 13:40:09.336743 | 2015-03-02 13:40:20.32 2804 | 69.3 3674 3116 3788 | 80.322 80397 41516 |

In an embodiment, the vehicle that has passed through the stations prior to a target station is represented as $V_0$. The present disclosure applies the predefined horizon/windows/frames over the scheduled transportation network's current and previous states. The first window is applied over stations, where for a target station $S_{n+1}$ whose delay is to be predicted, the plurality of stations like $S_{n-w_s}$, $S_{n-w_s+1}$,... $S_{n-w_s+n}$ stations where the vehicle has already stopped are considered. Data from these stations are utilized to extract features.

At step 206 of the method 200, the feature extraction module 604 executed by the one or more hardware processors 102 is configured by the programmed instructions to extract the plurality of spatial features based on the real time data, the plurality of stations, and the predefined horizon using the feature extraction technique.

For example, the feature extraction technique is a pattern matching technique. Initially, the feature extraction technique receives the raw data as shown in Table I and transforms into a plurality of transformed parameters. Further, a plurality of corresponding features (like the plurality of spatial features, the plurality of temporal features and the plurality of spatiotemporal features) are selected by comparing each of the plurality of transformed parameters with a plurality of corresponding predefined features. For example, it is predefined that the plurality of spatial features includes the geospatial information and vehicle/station capacity. These features are compared with the plurality of transformed parameters and appropriate information is obtained. The plurality of spatial features so formed is denoted by $X_S$. Here $w_s$ is the number of stations or stops in the predefined horizon (window).

In an embodiment, the plurality of spatial features refers to geospatial information about the stations, such as but not limited to distances between any two stations and a vehicle/station capacity associated with each of a plurality of stations. For example, the geospatial information includes distance between each of the plurality of stations and the at least one target station.

In an embodiment, the distance between the two stops/stations is the path that vehicles take to travel between the two stations. For a stop $S_i$, the distance is calculated between $S_{i-1}$ and $S_i$. It is denoted by $dist(S_{i-1}, S_i)$.

In an embodiment, the station vehicle capacity feature captures the physical station capacity for vehicles entering and leaving the station. For trains this is defined as the number of tracks in a station. For other modes, such as bus, it could be the width of the station indicating how many buses can stop there simultaneously. If no such information exists, a value 0 is assigned by the system 100. This is defined with respect $S_i$, and it is denoted by $capacity(S_i)$.

At step 208 of the method 200, the feature extraction module 604 executed by the one or more hardware processors 102 is configured by the programmed instructions to extract the plurality of temporal features based on the real time data, the plurality of stations, and the predefined horizon, using the similar feature extraction technique used for extracting the plurality of spatial features. The plurality of temporal features so formed is denoted by $X_T$ and it has the dimensions $(7 \times w_s \times w_v)$, where $w_s$ is the number of stops in the predefined horizon/window and $w_v$ is the number of vehicles in window. Further, the extracted temporal features are segmented based on a plurality of vehicle categories. The plurality of vehicle categories includes a route based vehicle and a trip based vehicle.

In an embodiment, the vehicles are of two types: (i) route-based and (ii) trip-based/route-agnostic. For the route based, the vehicles are picked up if they have hit the same stops in the same order as $V_0$, while also having arrived at each stop before $V_0$, and if they run on the same route (As defined by the data source, usually a route meaning a particular sequence of stops). For trip based/ route-agnostic, the vehicles need not share a route, $V_{w_v}^r, V_{w_v-1}^r \cdots$ and $V_{w_v}^t, V_{w_v-1}^t$ for route-based and trip-based respectively. However, the vehicle must hit the same stops in the same order as $V_0$, while also having arrived at each stop before $V_0$,.

In an embodiment, the temporal data refers to information that ties vehicles and stops together, such as the arrival and departure times, as well as the arrival and departure delay experienced at each stop. Temporal data is always defined with respect to a vehicle. The vehicle for which the future delay is to be predicted is denoted by $V_0$, and will be referred to as the current vehicle.

In an embodiment, the plurality of temporal features associated with each of the plurality of vehicles in each of the plurality of stations includes a scheduled travel time between a previous station and a current station, an actual travel time between the previous station and the current station, a scheduled dwell time, an actual dwell time, an actual interval with a preceding vehicle in the predefined horizon and a scheduled interval with the preceding vehicle in the predefined horizon.

In an embodiment, the scheduled/actual travel time is the time taken for the vehicle to travel from the previous stop/station to the current stop/station. The scheduled travel time is the difference of the scheduled arrival time at the second, and the departure at the first. The actual travel time takes arrival and departure delays into consideration. For stop $S_i$, travel time is calculated between $S_{i-1}$ and $S_i$. For a vehicle V, this is denoted by *sch_ttime*($V, S_{i-1}, S_i$) and *act_ttime*($V, S_{i-1}, S_i$).

In an embodiment, the scheduled/actual dwell time is the time that a vehicle dwelt at a station. The scheduled dwell time is the difference of the scheduled departure and arrival at a stop. Dwell time is calculated at $S_i$, and is denoted by *sch_dtime*($V,S_i$) and *act_ttime*($V, S_i$).

In an embodiment, the scheduled/actual interval with preceding vehicle: Consider a vehicle $V_{pc}$ called the preceding vehicle. This vehicle stopped at and departed from the stop, right before the vehicle $V$. The scheduled interval with preceding vehicle is then calculated as the difference of the scheduled departure time of vehicle $V$ at the station, and the scheduled departure time of vehicle $V_{pc}$. The actual interval with preceding vehicle takes into account the departure delay experienced. Interval with preceding vehicle is calculated at $S_i$, and is denoted by *sch_ptime* ($V, V_{pc}, S_i$) and *act_ptime*($V, V_{pc}, S_i$).

In an embodiment, the scheduled number of stops is the number of stops that occurred between the last stop and the current stop and is denoted by *sstops*($V, S_{i-1}, S_i$).

At step 210 of the method 200, the feature extraction module 604 executed by the one or more hardware processors 102 is configured by the programmed instructions to extract the plurality of spatiotemporal features based on the plurality of stations, the plurality of vehicles, and the real time data, using the feature extraction technique used for extracting the plurality of spatial features and the plurality of temporal features. The plurality of spatiotemporal features includes an arrival delay and the departure delay associated with each of the plurality of vehicles in each of the plurality of stations. The arrival delay is denoted by *arr_delay*($V, S_i$) and the departure delay is denoted by *dep_delay*($V, S_i$). This data is then stacked into cubes. The plurality of spatial features so formed is denoted by $X_{ST}$. It has the dimensions ($4 \times w_s \times w_v \times 1$ ).

At step 212 of the method 200, the delay prediction module 604 executed by the one or more hardware processors 102 is configured by the programmed instructions to predict the expected delay $y$ of the target vehicle in at least one target station based on the plurality of spatial features, the plurality of temporal features and the plurality of spatiotemporal features using a trained adversarial regression model. The trained adversarial regression model includes a critic network and a regressor network.

In an embodiment, the critic network includes two feed forward layers. The first feed forward layer transforms the concatenated input $X_S \| X_T \| X_{ST} \| y$ into a dimensional space which is half of actual size, and then the second feed forward layer reduces it to a scalar quantity, which is termed as critic score as given in equation (3).

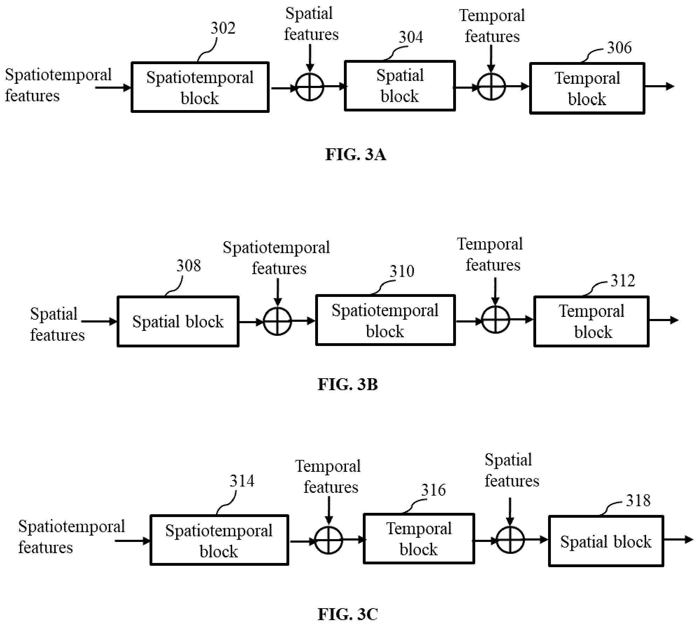

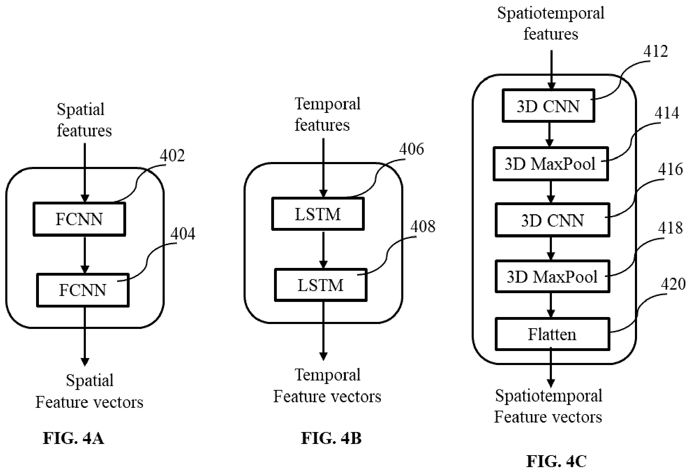

The regressor network includes a plurality of blocks. The plurality of blocks includes a spatial block for processing the plurality of spatial features and to generate a spatial feature vector, a temporal block for processing the plurality of temporal features and to generate a temporal feature vector and a spatiotemporal block for processing the plurality of spatiotemporal features and to generate the spatiotemporal feature vector as shown in FIGS 3A to 3G. The spatial block includes a plurality of Fully Connected Neural Networks (FCNNs) as shown in FIG. 4A. The temporal block includes a plurality of Long Short-Term Memory (LSTMs) as shown in FIG. 4B. The spatiotemporal block includes a plurality of 3Dimensional Convolutional Neural Network (3DCNNs) as shown in FIG. 4C. The plurality of blocks are connected in one of a) a serial fashion and b) a parallel fashion. The plurality of blocks connected in the serial fashion includes a plurality of regression architectures obtained using permutation as shown in FIGS 3A to 3G. The plurality of regression architectures are trained simultaneously and, wherein one architecture from the plurality of regression architectures are selected for the expected delay prediction, wherein the architecture with a minimum Mean Absolute Error (MAE) is selected.

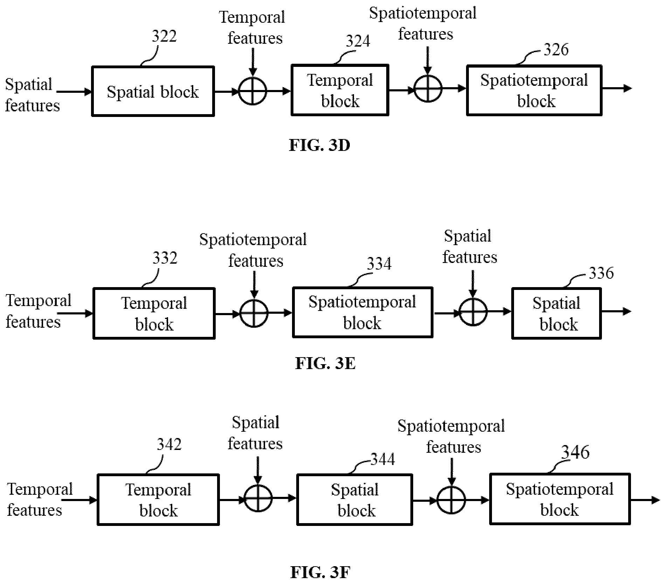

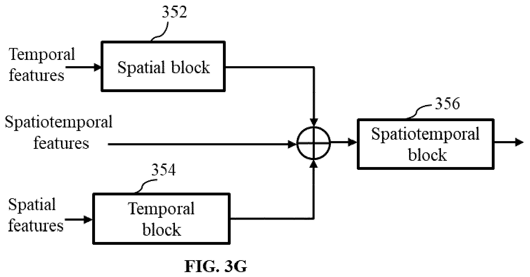

FIGS. 3A to 3G illustrate multiple architectures associated with the regressor network of the processor implemented method for adversarial multi-architecture based delay prediction in scheduled transportation networks, implemented by the system of FIG. 1, in accordance with some embodiments of the present disclosure. Now referring to FIG. 3A, a spatiotemporal block 302 which receives the plurality of spatial features and generates the corresponding spatial vector. The spatial vector is given as input to the spatial block 304 which processes the plurality of spatial features and generates the spatial feature vector. Further, the spatial feature vector is given as input to the temporal block 306 which receives the plurality of temporal features and generates the temporal feature vector. Similarly, FIG. 3B includes a spatial block 308, the spatiotemporal block 310 and a temporal block 312 arranged sequentially. Similarly, FIG. 3C includes the spatiotemporal block 314, a temporal block 316 and the spatial block 318, arranged sequentially. Similarly, FIG. 3D includes the spatial block 322, a temporal block 324 and the spatial block 326, arranged sequentially. Similarly, FIG. 3E includes the temporal block 332, a spatiotemporal block 334 and the spatial block 336, arranged sequentially. Similarly, FIG. 3F includes the temporal block 342, a spatial block 344 and the spatiotemporal block 346, arranged sequentially. In an embodiment, FIG. 3G includes the spatial block 352, a temporal block 354 connected in parallel. The output of these two blocks are given input to the spatiotemporal block 356.

FIGS. 4A to 4C illustrate the internal architecture of spatial, temporal and spatiotemporal blocks of the processor implemented method for adversarial multi-architecture based delay prediction in scheduled transportation networks, implemented by the system of FIG. 1, in accordance with some embodiments of the present disclosure. Now referring to FIG. 4A, the spatial block includes the FCNNs 402 and 404. The FCNNs includes a plurality of fully connected weights matrices for processing the plurality if spatial features.

Now referring to FIG. 4B, the temporal block includes the LSTMs 406 and 408. The LSTMs includes a plurality of recurrent units that keep track of information from past time steps and capable of processing sequential data like the plurality of temporal features.

Now referring to FIG. 4C, the spatiotemporal block includes 3D CNNs 412 and 416, 3D MaxPools 414 and 418 and flatten block 420. The 3D CNN 412 and 416, includes 3D convolutional layers which take advantage of local properties of three-dimensional data and processes the plurality of spatiotemporal features. The 3D MaxPool 414 reduces the dimension of the data passing to impose translation invariance and reduce computation requirements. The Flatten Block 420 reshapes the data so that it has a flat feature structure.

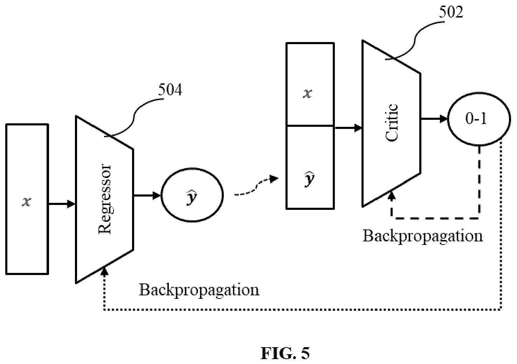

FIG. 5 illustrates a training method for the processor implemented method for adversarial multi-architecture based delay prediction in scheduled transportation networks, in accordance with some embodiments of the present disclosure. Now referring to FIG. 5, the training network includes the critic network 502 and the regressor network 504. The critic 502 learns that the actual sample should be scored highly through back propagation. The regressor estimates the delay from the training samples. Further the estimated delay along with the training samples are used for training the critic network and the critic network learns that the estimated samples should be given low score. Further, the learnings of the critic network is updated in the regressor network through backpropagation until a minimum regression loss is obtained. The details of training are explained below.

The method of training the adversarial regression model is explained as follows: Initially, a training dataset comprising a plurality of samples is received. Further, a plurality of features corresponding to each of the plurality of samples associated with the training dataset are generated. The plurality of features includes the plurality of spatial features, the plurality of temporal features and the plurality of spatiotemporal features. Further, a plurality of actual training samples are generated based on the plurality of features and a corresponding actual delay, wherein the actual delay is a historical delay. Further, the adversarial regression model is trained until a minimum regression loss is obtained by repeatedly performing the following steps. (i) training the critic network associated with the adversarial regression model with the plurality of actual training samples until the critic network is trained to identify a positive sample, wherein the positive sample is associated with a critic score greater than a predefined threshold. For example, the predefined threshold is 0.5 (ii) computing a predicted delay corresponding to each of the plurality of samples based on the corresponding feature vector using the regressor network associated with the adversarial regression model (iii) generating a plurality of estimated training samples based on the corresponding feature vector and a corresponding predicted delay (iv) training the critic network with the plurality of estimated samples until the critic network is trained to identify a negative sample, wherein the negative sample is associated with the critic score less than the predefined threshold and (v) updating the regressor network based on a gradient associated with the negative sample such that future negative sample is associated with the critic score greater than the predefined threshold.

Given the aforementioned feature vectors, the task is to then learn a function *f* given in equation (1),

$$f(X_S, X_T, X_{ST}) = y \dots\dots\dots\dots\dots\dots(1)$$

where y is the delay at the target station. In an embodiment, the dimension of the feature vectors are changed in order to pass them through a particular kind of neural network. Equation (1) describes a standard regression problem. Given the target variable *y* and the predicted variable $\hat{y}$ that the regression model outputs, the goal of the model is to reduce the *RMSE/L2* loss given in equation (2).

$$L_{L_2} = \sqrt{\frac{1}{n}\sum_{i=1}^{n}(y_i - \hat{y}_i)^2} \dots\dots\dots\dots\dots(2)$$

In addition to this loss, an adversarial loss is added to the present disclosure. The adversary is a critic network that learns what delays are plausible for a given data sample, which is given by the function D,

$$D(X_S, X_T, X_{ST}, y) = s \ \dots\dots\dots\dots\dots(3)$$

where s is a score in [0, 1]. The critic network does not try to regress the delay, but only indicates whether it is likely according to the joint distribution i.e. the probability $p(X_S, X_T, X_{ST}, y)$. When the regressor function *f* outputs a delay y, this critic determines whether the regressor network's estimate of the delay is good for the input given. The latter then uses this information to make its estimates better. This, theoretically, goes on until the critic can no longer distinguish between the original distribution and the one produced by the regressor.

In an embodiment, the adversarial loss of the critic network is given by equation (4). Now referring to equation (4), the $X_S, X_T, X_{ST}$ are written as *x* for brevity.

$$L_{critic} = -\log(D(x, y)) - \log(1 - D(x, f(x))) \dots\dots\dots\dots\dots(4)$$

In an embodiment, the adversarial loss of the regressor network is introduced in the loss function given in equation (2) and the loss function obtained in given in equation (5).

$$L_{regressor} = -\log\left(D(x, f(x))\right) + L_{L_2} \dots\dots\dots\dots\dots(5)$$

Either term of the loss can be weighted by a parameter $\lambda$, which weights the gradients flowing from that term. Also, $L_{L_2}$ is an optional term. The adversarial loss alone can get similar results.

The present disclosure is experimented with various schedule based transportation networks, and the results are better than the conventional methods. The multi architecture of the regressor network has been tested in Belgium railway network and the results are shown in Table II. Now referring to Table II, the Table II illustrates the results for the plurality of architectures associated with the regressor network trained on the Belgium railway network. MAE is for models trained with data where delays are lesser than 100 minutes. MAE* is for models trained with delays greater than 100 minutes present. MAE# is for models trained without the adversarial approach, with delays lesser than 100 minutes. Further, it has been observed based on experimentation that the MAE for each architecture varies for different datasets. Hence it is important to train each of the plurality of regression architectures for a corresponding dataset and to select a best architecture for the real time delay prediction based on the MAE. Generally, the architecture with minimum MAE is selected for real time delay prediction.

Table II

| Architecture | $w_s$ | $w_t$ | Type of trains | MAE | MAE* | MAE# |
|---|---|---|---|---|---|---|
| STSpaTem | 3 | 3 | Route | 0.395 | 0.393 | 0.481 |
| | 3 | 3 | Trip | 0.395 | 0.411 | 0.462 |
| | 3 | 5 | Both | 0.396 | 0.398 | 0.482 |
| | 5 | 3 | Route | 0.658 | 0.667 | 0.45 |
| | 5 | 3 | Trip | 0.656 | 0.624 | 0.49 |
| | 5 | 5 | Both | 0.632 | 0.69 | 0.473 |
| SSpaTemT | 3 | 3 | Route | 0.432 | 0.461 | 0.438 |
| | 3 | 3 | Trip | 0.397 | 0.452 | 0.447 |
| | 3 | 5 | Both | 0.385 | 0.453 | 0.439 |
| | 5 | 3 | Route | 0.747 | 0.841 | 0.475 |
| | 5 | 3 | Trip | 0.647 | 0.769 | 0.473 |
| | 5 | 5 | Both | 0.665 | 0.722 | 0.46 |
| SpaTemTS | 3 | 3 | Route | 0.411 | 0.45 | 0.459 |
| | 3 | 3 | Trip | 0.401 | 0.453 | 0.455 |
| | 3 | 5 | Both | 0.406 | 0.462 | 0.454 |
| | 5 | 3 | Route | 0.698 | 0.696 | 0.484 |
| | 5 | 3 | Trip | 0.622 | 0.681 | 0.48 |
| | 5 | 5 | Both | 0.663 | 0.691 | 0.482 |
| SpaTemST | 3 | 3 | Route | 0.411 | 0.463 | 0.438 |
| | 3 | 3 | Trip | 0.414 | 0.449 | 0.444 |
| | 3 | 5 | Both | 0.402 | 0.461 | 0.436 |
| | 5 | 3 | Route | 0.677 | 0.803 | 0.462 |
| | 5 | 3 | Trip | 0.736 | 0.818 | 0.461 |
| | 5 | 5 | Both | 0.702 | 0.704 | 0.476 |
| TSpaTemS | 3 | 3 | Route | 0.405 | 0.388 | 0.44 |
| | 3 | 3 | Trip | 0.394 | 0.497 | 0.437 |
| | 3 | 5 | Both | 0.41 | 0.394 | 0.437 |
| | 5 | 3 | Route | 0.655 | 0.624 | 0.458 |
| | 5 | 3 | Trip | 0.644 | 0.617 | 0.446 |
| | 5 | 5 | Both | 0.646 | 0.624 | 0.448 |
| TSSpaTem | 3 | 3 | Route | 0.398 | 0.411 | 0.402 |
| | 3 | 3 | Trip | 0.395 | 0.396 | 0.398 |
| | 3 | 5 | Both | 0.402 | 0.402 | - |
| | 5 | 3 | Route | 0.707 | 0.629 | - |
| | 5 | 3 | Trip | 0.685 | 0.718 | 0.417 |
| | 5 | 5 | Both | 0.646 | 0.64 | 0.413 |
| TSSpaTem parallel | 3 | 3 | Route | 0.405 | 0.396 | 0.406 |
| | 3 | 3 | Trip | 0.424 | 0.381 | 0.411 |

(continued)

| Architecture | $w_s$ | $w_t$ | Type of trains | MAE | MAE* | MAE# |
|---|---|---|---|---|---|---|
| | 3 | 5 | Both | 0.403 | 0.391 | - |
| | 5 | 3 | Route | 0.689 | 0.628 | 0.424 |
| | 5 | 3 | Trip | 0.681 | 0.63 | - |
| | 5 | 5 | Both | 0.694 | 0.633 | 0.4 |

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein address the unresolved problem of accurate delay prediction in schedule based transportation networks using adversarial learning. The present disclosure uses an adversary network to train the regression model instead of the conventional regression model which directly learns from the target value. The adversary or critic or teacher network is part of the architecture, and backpropagation of the loss gradient happens through the adversary to the regressor network. Further, a set of neural network architectures which can process spatial, temporal, and spatiotemporal (multimodal) features by combining FCNN, LSTM, and 3DCNN are used in the present disclosure. The plurality of architectures can be trained on data from any of the scheduled transport system and a best architecture is elected based on MAE.

It is to be understood that the scope of the protection is extended to such a program and in addition to a computer-readable means having a message therein such computer-readable storage means contain program-code means for implementation of one or more steps of the method when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software modules located therein. Thus, the means can include both hardware means and software means. The method embodiments described herein could be implemented in hardware and software. The device may also include software means. Alternatively, the embodiments may be implemented on different hardware devices, e.g. using a plurality of CPUs, GPUs and edge computing devices.

The embodiments herein can comprise hardware and software elements. The embodiments that are implemented in software include but are not limited to, firmware, resident software, microcode, etc. The functions performed by various modules described herein may be implemented in other modules or combinations of other modules. For the purposes of this description, a computer-usable or computer readable medium can be any apparatus that can comprise, store, communicate, propagate, or transport the program for use by or in connection with the instruction execution system, apparatus, or device. The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise. Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e. non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor implemented method (200), the method comprising:

   receiving (202), by one or more hardware processors, a user query with respect to an expected delay of a target vehicle pertaining to a scheduled transportation network, in at least one target station, wherein the scheduled transportation networks include a plurality of stations and a plurality of vehicles;
   obtaining (204), by the one or more hardware processors, a real time data associated with the user query in a predefined horizon using a real time data acquisition system;
   extracting (206), by the one or more hardware processors, a plurality of spatial features based on the real time data, the plurality of stations in the scheduled transportation networks, the plurality of vehicles in the scheduled transportation networks, and the predefined horizon, using a feature extraction technique;
   extracting (208), by the one or more hardware processors, a plurality of temporal features based on the real time data, the plurality of stations, and the predefined horizon, using the feature extraction technique, wherein the plurality of temporal features are segmented based on a plurality of vehicle categories, wherein the plurality of vehicle categories comprises a route based vehicle, a trip based vehicle, and a current vehicle;
   extracting (210), by the one or more hardware processors, a plurality of spatiotemporal features based on the plurality of stations, the plurality of vehicles, and the real time data, using the feature extraction technique; and
   predicting (212), by the one or more hardware processors, the expected delay of the target vehicle in at least one target station based on the spatial features, the temporal features and the spatiotemporal features using a trained adversarial regression model, wherein the trained adversarial regression model comprises a critic network and a regressor network, wherein the regressor network is trained using a plurality of regression architectures, wherein the plurality of regression architectures are trained simultaneously and, wherein one architecture with a minimum Mean Absolute Error (MAE) is selected from among the plurality of regression architectures is selected for the expected delay prediction.

2. The processor implemented method of claim 1, wherein the critic network comprises two feed forward layers, wherein the regressor network comprises a plurality of blocks, wherein the plurality of blocks comprises a spatial block for processing the spatial feature vector, a temporal block for processing the temporal feature vector and a spatiotemporal block for processing the spatiotemporal feature vector, wherein the spatial block comprises a plurality of Fully Connected Neural Networks (FCNNs), wherein the temporal block comprises a plurality of Long Short-Term Memory (LSTMs), and wherein the spatiotemporal block comprises a plurality of 3Dimensional Convolutional Neural Network (3DCNNs).

3. The processor implemented method of claim 1, wherein the method of training the adversarial regression model comprises:

   receiving a training dataset further comprising a plurality of samples;
   generating a plurality of features corresponding to each of the plurality of samples associated with the training dataset, wherein the plurality of features comprises the plurality of spatial features, the plurality of temporal features, and the plurality of spatiotemporal features;
   generating a plurality of actual training samples based on the plurality of features and a corresponding actual delay, wherein the actual delay is a historical delay; and
   repeatedly performing until a minimum regression loss is obtained:

   training the critic network associated with the adversarial regression model with the plurality of actual training samples until the critic network is trained to identify a positive sample, wherein the positive sample is associated with a critic score greater than a predefined threshold;
   computing a predicted delay corresponding to each of the plurality of samples based on a corresponding feature vector, using the regressor network associated with the adversarial regression model;
   generating a plurality of estimated training samples based on the corresponding feature vector and a corresponding predicted delay;
   training the critic network with the plurality of estimated samples until the critic network is trained to identify a negative sample, wherein the negative sample is associated with the critic score less than the predefined threshold; and

updating the regressor network based on a gradient associated with the negative sample such that each subsequent negative sample is associated with the critic score greater than the predefined threshold.

4. The processor implemented method of claim 1, wherein the plurality of spatial features comprises geospatial information about the at least one target station and a vehicle capacity associated with each of a plurality of stations, wherein the geospatial information comprises distance between each of the plurality of stations and the at least one target station.

5. The processor implemented method of claim 1, wherein the plurality of temporal features associated with each of the plurality of vehicles in each of the plurality of stations comprises, a scheduled travel time between a previous station and a current station, an actual travel time between the previous station and the current station, a scheduled dwell time, an actual dwell time, an actual interval with a preceding vehicle in the predefined horizon and a scheduled interval with the preceding vehicle in the predefined horizon.

6. The processor implemented method of claim 1, wherein the plurality of spatiotemporal features comprises an arrival delay and a departure delay associated with each of the plurality of vehicles in each of the plurality of stations.

7. The processor implemented method of claim 1, wherein the plurality of blocks are connected in one of a) a serial fashion and b) a parallel fashion.

8. The processor implemented method of claim 7, wherein the plurality of blocks connected in the serial fashion comprises the plurality of regression architectures obtained using permutation.

9. A system (100) comprising:

at least one memory (104) storing programmed instructions; one or more Input /Output (I/O) interfaces (112); and one or more hardware processors (102) operatively coupled to the at least one memory (104), wherein the one or more hardware processors (102) are configured by the programmed instructions to:

receive a user query with respect to an expected delay of a target vehicle pertaining to a scheduled transportation network, in at least one target station, wherein the scheduled transportation networks include a plurality of stations and a plurality of vehicles;

obtain a real time data associated with the user query in a predefined horizon using a real time data acquisition system;

extract a plurality of spatial features based on the real time data, the plurality of stations in the scheduled transportation networks, the plurality of vehicles in the scheduled transportation networks, and the predefined horizon, using a feature extraction technique;

extract a plurality of temporal features based on the real time data, the plurality of stations, and the predefined horizon, using the feature extraction technique, wherein the plurality of temporal features are segmented based on a plurality of vehicle categories, wherein the plurality of vehicle categories comprises a route based vehicle, a trip based vehicle, and a current vehicle;

extract a plurality of spatiotemporal features based on the plurality of stations, the plurality of vehicles, and the real time data, using the feature extraction technique; and

predict the expected delay of the target vehicle in at least one target station based on the spatial features, the temporal features and the spatiotemporal features using a trained adversarial regression model, wherein the trained adversarial regression model comprises a critic network and a regressor network, wherein the regressor network is trained using a plurality of regression architectures, wherein the plurality of regression architectures are trained simultaneously and, wherein one architecture with a minimum Mean Absolute Error (MAE) is selected from among the plurality of regression architectures is selected for the expected delay prediction.

10. The system of claim 9, wherein the critic network comprises two feed forward layers, wherein the regressor network comprises a plurality of blocks, wherein the plurality of blocks comprises a spatial block for processing the spatial feature vector, a temporal block for processing the temporal feature vector and a spatiotemporal block for processing the spatiotemporal feature vector, wherein the spatial block comprises a plurality of Fully Connected Neural Networks (FCNNs), wherein the temporal block comprises a plurality of Long Short-Term Memory (LSTMs), and wherein the spatiotemporal block comprises a plurality of 3Dimensional Convolutional Neural Network (3DCNNs).

11. The system of claim 9, wherein the method of training the adversarial regression model comprises:

> receiving a training dataset comprising a plurality of samples;
> generating a plurality of features corresponding to each of the plurality of samples associated with the training dataset, wherein the plurality of features comprises the plurality of spatial features, the plurality of temporal features, and the plurality of spatiotemporal features;
> generating a plurality of actual training samples based on the plurality of features and a corresponding actual delay, wherein the actual delay is a historical delay; and
> repeatedly performing until a minimum regression loss is obtained:
>
>> training the critic network associated with the adversarial regression model with the plurality of actual training samples until the critic network is trained to identify a positive sample, wherein the positive sample is associated with a critic score greater than a predefined threshold;
>> computing a predicted delay corresponding to each of the plurality of samples based on a corresponding feature vector, using the regressor network associated with the adversarial regression model;
>> generating a plurality of estimated training samples based on the corresponding feature vector and a corresponding predicted delay;
>> training the critic network with the plurality of estimated samples until the critic network is trained to identify a negative sample, wherein the negative sample is associated with the critic score less than the predefined threshold; and
>> updating the regressor network based on a gradient associated with the negative sample such that each subsequent negative sample is associated with the critic score greater than the predefined threshold.

12. The system of claim 9, wherein the plurality of spatial features comprises geospatial information about the at least one target station and a vehicle capacity associated with each of a plurality of stations, wherein the geospatial information comprises distance between each of the plurality of stations and the at least one target station.

13. The system of claim 9, wherein the plurality of temporal features associated with each of the plurality of vehicles in each of the plurality of stations comprises, a scheduled travel time between a previous station and a current station, an actual travel time between the previous station and the current station, a scheduled dwell time, an actual dwell time, an actual interval with a preceding vehicle in the predefined horizon and a scheduled interval with the preceding vehicle in the predefined horizon and, wherein the plurality of spatiotemporal features comprises an arrival delay and a departure delay associated with each of the plurality of vehicles in each of the plurality of stations

14. The system of claim 9, wherein the plurality of blocks are connected in one of a) a serial fashion and b) a parallel fashion and, wherein the plurality of blocks connected in the serial fashion comprises the plurality of regression architectures obtained using permutation.

15. One or more non-transitory machine-readable information storage mediums comprising one or more instructions which when executed by one or more hardware processors cause:

> receiving a user query with respect to an expected delay of a target vehicle pertaining to a scheduled transportation network, in at least one target station, wherein the scheduled transportation networks include a plurality of stations and a plurality of vehicles;
> obtaining a real time data associated with the user query in a predefined horizon using a real time data acquisition system;
> extracting a plurality of spatial features based on the real time data, the plurality of stations in the scheduled transportation networks, the plurality of vehicles in the scheduled transportation networks, and the predefined horizon, using a feature extraction technique;
> extracting a plurality of temporal features based on the real time data, the plurality of stations, and the predefined horizon, using the feature extraction technique, wherein the plurality of temporal features are segmented based on a plurality of vehicle categories, wherein the plurality of vehicle categories comprises a route based vehicle, a trip based vehicle, and a current vehicle;
> extracting a plurality of spatiotemporal features based on the plurality of stations, the plurality of vehicles, and the real time data, using the feature extraction technique; and
> predicting the expected delay of the target vehicle in at least one target station based on the spatial features, the temporal features and the spatiotemporal features using a trained adversarial regression model, wherein the trained adversarial regression model comprises a critic network and a regressor network, wherein the regressor network is trained using a plurality of regression architectures, wherein the plurality of regression architectures are trained simultaneously and, wherein one architecture with a minimum Mean Absolute Error (MAE) is selected from among the plurality of regression architectures is selected for the expected delay prediction.

FIG. 1

200

receive a user query with respect to an expected delay of a target vehicle pertaining to a scheduled transportation system in at least one target station    202

obtain a real time data associated with the user query in a predefined horizon using a real time scheduled transportation data acquisition system    204

extracting a plurality of spatial features based on the real time data, a plurality of stations and the predefined horizon using a feature extraction technique    206

extract a plurality of temporal features based on the real time data, the plurality of stations and the predefined horizon using a feature extraction technique, wherein the plurality of temporal features are segmented based on a plurality of vehicle categories, wherein the plurality of vehicle categories comprises a route-based vehicle, a trip-based vehicle and a current vehicle    208

extract a plurality of spatiotemporal features based on the plurality of stations, the plurality of vehicles and the real time data using the feature extraction technique    210

predict the expected delay of the target vehicle in at least one target station based on the plurality of spatial features, the plurality of temporal features and the plurality of spatiotemporal features using a trained adversarial regression model, wherein the trained adversarial regression model comprises a critic network and a regressor network wherein the regressor network is trained using a plurality of regression architectures, wherein the plurality of regression architectures are trained simultaneously and, wherein one architecture with a minimum Mean Absolute Error (MAE) is selected from among the plurality of regression architectures is selected for the expected delay prediction    212

**FIG. 2**

Spatiotemporal
features → **Spatiotemporal block** (302) → ⊕ ← Spatial features → **Spatial block** (304) → ⊕ ← Temporal features → **Temporal block** (306) →

**FIG. 3A**

Spatial
features → **Spatial block** (308) → ⊕ ← Spatiotemporal features → **Spatiotemporal block** (310) → ⊕ ← Temporal features → **Temporal block** (312) →

**FIG. 3B**

Spatiotemporal
features → **Spatiotemporal block** (314) → ⊕ ← Temporal features → **Temporal block** (316) → ⊕ ← Spatial features → **Spatial block** (318) →

**FIG. 3C**

Spatial features →
**322**
Spatial block
⊕ ← Temporal features
**324**
Temporal block
⊕ ← Spatiotemporal features
**326**
Spatiotemporal block
→

**FIG. 3D**

Temporal features →
**332**
Temporal block
⊕ ← Spatiotemporal features
**334**
Spatiotemporal block
⊕ ← Spatial features
**336**
Spatial block
→

**FIG. 3E**

Temporal features →
**342**
Temporal block
⊕ ← Spatial features
**344**
Spatial block
⊕ ← Spatiotemporal features
**346**
Spatiotemporal block
→

**FIG. 3F**

FIG. 3G

356 — Spatiotemporal block

352 — Spatial block

Temporal features

Spatiotemporal features

354 — Temporal block

Spatial features

Spatial
features

402

FCNN

404

FCNN

Spatial
Feature vectors

**FIG. 4A**

Temporal
features

406

LSTM

408

LSTM

Temporal
Feature vectors

**FIG. 4B**

Spatiotemporal
features

412

3D CNN

414

3D MaxPool

416

3D CNN

418

3D MaxPool

420

Flatten

Spatiotemporal
Feature vectors

**FIG. 4C**

21

**FIG. 5**

22

600

Real time data → User query →

Data acquisition 602

Feature extraction 604

Spatial feature extraction 606

Temporal feature extraction 608

Spatiotemporal feature extraction 610

Delay Prediction 612

**FIG. 6**

Europäisches
Patentamt

European
Patent Office

Office européen
des brevets

# EUROPEAN SEARCH REPORT

Application Number

EP 23 17 3893

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HUANG PING ET AL: "A deep learning approach for multi-attribute data: A study of train delay prediction in railway systems", INFORMATION SCIENCES, ELSEVIER, AMSTERDAM, NL, vol. 516, 25 December 2019 (2019-12-25), pages 234-253, XP085993233, ISSN: 0020-0255, DOI: 10.1016/J.INS.2019.12.053 [retrieved on 2019-12-25] * the whole document * | 1-15 | INV. G06N3/0442 G06N3/045 G06N3/0464 G06N3/0499 G06N3/082 G06N3/084 G06N3/09 G06N3/0985 G06Q10/04 G06Q10/063 G06Q50/30 G06N3/094 |
| A | JIEXIA YE ET AL: "How to Build a Graph-Based Deep Learning Architecture in Traffic Domain: A Survey", ARXIV.ORG, CORNELL UNIVERSITY LIBRARY, 201 OLIN LIBRARY CORNELL UNIVERSITY ITHACA, NY 14853, 11 October 2020 (2020-10-11), XP081782982, * the whole document * | 1-15 | |
| A | JINLEI ZHANG ET AL: "STG-GAN: A spatiotemporal graph generative adversarial networks for short-term passenger flow prediction in urban rail transit systems", ARXIV.ORG, CORNELL UNIVERSITY LIBRARY, 201 OLIN LIBRARY CORNELL UNIVERSITY ITHACA, NY 14853, 10 February 2022 (2022-02-10), XP091341491, * the whole document * | 1-15 | **TECHNICAL FIELDS SEARCHED (IPC)** G06N G06Q |

The present search report has been drawn up for all claims

| Place of search | Date of completion of the search | Examiner |
|---|---|---|
| The Hague | 1 November 2023 | Szymanski, Francois |

EPO FORM 1503 03.82 (P04C01)

**EP 4 293 572 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202221033795